# FASCICULE DE BREVET EUROPEEN

(11) **EP 2 608 662 B1**
(45) Date de publication et mention de la délivrance du brevet: **06.08.2014**
(21) Numéro de dépôt: 11758530.7
(22) Date de dépôt: 22.08.2011
(51) Int. Cl.: A01M 7/00

(54) **SYSTÈME ET PROCÉDÉ DE REMPLISSAGE D'UNE CUVE DE PULVÉRISATEUR**
SYSTEM UND VERFAHREN ZUM BEFÜLLEN EINES SPRAYBEHÄLTERS
SYSTEM AND METHOD FOR FILLING A SPRAYER TANK

(30) Priorité: 23.08.2010 FR 1056710
(43) Date de publication de la demande: 03.07.2013
(73) Titulaire: EXEL INDUSTRIES, 51200 Epernay (FR)
(72) Inventeur: BALLU, Patrick, F-51100 Reims (FR)
(74) Mandataire: Myon, Gérard Jean-Pierre
(86) Numéro de dépôt international: PCT/FR2011/051941
(87) Numéro de publication internationale: WO 2012/025686

(56) Documents cités:
- EP-A1- 1 415 535
- FR-A1- 2 714 572
- US-A- 3 976 087
- US-A- 5 628 431
- US-B1- 6 345 772

## Description

La présente invention concerne un système de remplissage d'une cuve de pulvérisateur. L'invention concerne également un procédé de remplissage d'une cuve de pulvérisateur. Le domaine de l'invention est celui des équipements destinés aux pulvérisateurs agricoles remorqués, portés ou automoteur.

Dans ce domaine, on cherche à accroitre le rendement des pulvérisateurs, notamment sur les exploitations agricoles de dimensions importantes. En pratique, on cherche à réduire le temps d'incorporation de matière active et de remplissage de la cuve d'un pulvérisateur, ainsi que le temps de trajet du pulvérisateur sans pulvérisation, au profit du temps effectif de pulvérisation dans le champ ou le verger.

Pour ce faire, de manière connue, une certaine quantité de matière active est versée directement dans une cuve de pulvérisateur, ou bien versée dans un système de préparation d'un concentré actif lui-même versé dans la cuve.

FR-A-2 878 243 décrit un système de remplissage d'une cuve de pulvérisateur, comprenant une unité d'alimentation en eau, un dispositif de commande, des vannes hydrauliques et un dispositif de détection du niveau de remplissage de la cuve. La matière active est incorporée à la cuve, puis le système y verse le complément en eau. Lorsque le dispositif de détection détecte que le niveau prédéterminé de liquide est atteint à l'intérieur de la cuve, il envoie un signal au dispositif de commande afin de déclencher la fermeture les vannes.

EP-A-1 415 535 décrit un système de remplissage d'une cuve de pulvérisateur, comprenant un premier réservoir contenant de l'eau, un deuxième réservoir contenant un produit chimique, ainsi qu'un dispositif de couplage du système à la cuve. Le deuxième réservoir peut être subdivisé en plusieurs compartiments contenant différents produits chimiques. Le système comprend également des moyens de pompage commandés par un dispositif de commande et configurés pour remplir sélectivement la cuve avec les solutions liquides, à savoir l'eau et/ou les produits chimiques. Toutefois, le système n'est pas adapté pour préparer un mélange concentré dans l'un des réservoirs en mélangeant l'eau et les produits chimiques en proportions prédéterminées.

Les procédés de remplissage connus sont longs à mettre en oeuvre et nécessitent de nombreuses manipulations, notamment pour la préparation du mélange concentré et/ou pour le remplissage de la cuve de pulvérisateur. De plus, le pulvérisateur est immobilisé pendant un temps important lors de son remplissage. Egalement, le pulvérisateur est forcé de se déplacer vers la citerne d'eau ou de mélange pour remplir la cuve lorsque celle-ci est vide, ce qui représente une perte de temps supplémentaire.

Le but de la présente invention est de résoudre les problèmes de l'art antérieur. En particulier, l'invention vise à réduire conjointement le temps de préparation du concentré actif et le temps de remplissage de la cuve.

A cet effet, l'invention a pour objet un système de remplissage défini à la revendication 1.

L'invention a également pour objet un procédé de remplissage défini à la revendication 12.

Ainsi, l'invention permet de réduire le temps de remplissage de la cuve, notamment en réduisant les manipulations et en préparant le concentré actif en temps masqué. En effet, la matière active est incorporée préalablement au remplissage, sans immobiliser le pulvérisateur et avec une concentration maîtrisée. Autrement dit, le pulvérisateur est alimenté avec une bouillie ou un mélange concentré prêt à projeter. Les moyens de préparation du mélange concentré permettent une préparation rapide et efficace de ce mélange, maintenu en suspension en attendant d'être projeté. Ensuite, le remplissage de la cuve est effectué rapidement et sans interruption à l'aide des moyens de pompage, notamment une pompe centrifuge. En outre, ces moyens de pompage permettent de choisir la ou les solutions liquides de remplissage, parmi lesquelles se trouve au moins le mélange de concentré actif.

De préférence, le système de remplissage est mobile, en étant par exemple monté sur une remorque. Ainsi, le système de remplissage peut être déplacé sur la remorque pour suivre ou rejoindre le pulvérisateur en bordure du champ, alors que le concentré actif est déjà préparé, et procéder au remplissage de la cuve dès que nécessaire. Par ailleurs, le fait de prévoir un système de remplissage distinct du pulvérisateur permet d'utiliser ce système pour plusieurs pulvérisateurs, en particulier essentiellement en temps masqué.

En variante, le système de remplissage comprend une citerne d'eau qui peut être désaccouplée des autres éléments constitutifs du système, notamment des moyens de préparation et de stockage des matières actives. Ainsi, la citerne d'eau peut être transportée sur une grande distance pour son remplissage. Avantageusement, dans le même temps, le mélange concentré préparé au préalable dans le système est prêt à projeter.

D'autres caractéristiques avantageuses du système selon l'invention, prises isolément ou en combinaison, sont spécifiées aux revendications 2 à 11.

D'autres caractéristiques avantageuses du procédé selon l'invention, prises isolément ou en combinaison, sont spécifiées aux revendications 13 à 15.

L'invention sera mieux comprise à la lecture de la description qui va suivre, donnée uniquement à titre d'exemple non limitatif et faite en référence aux dessins sur lesquels :
- la figure 1 est une représentation schématique d'un véhicule pulvérisateur comprenant une cuve et d'un véhicule semi-remorque comprenant un système de remplissage, conforme à l'invention, de la cuve de pulvérisateur ;
- la figure 2 est une représentation schématique à plus grande échelle d'une unité de préparation et de remplissage appartenant au système de remplissage de la figure 1 ; et
- la figure 3 est un logigramme montrant les différentes étapes d'un procédé de remplissage conforme à l'invention.

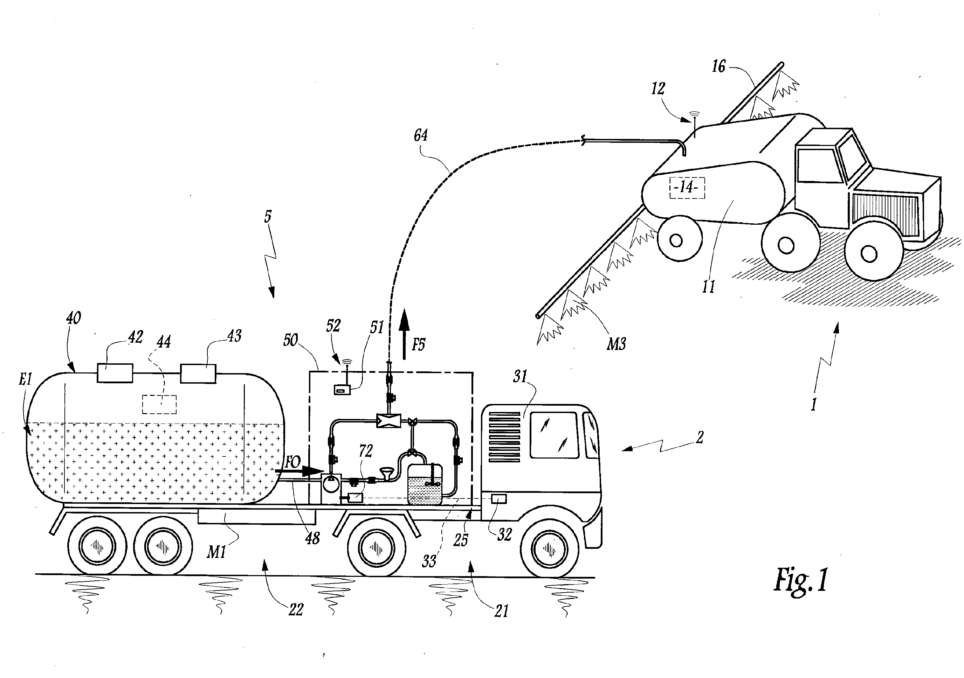

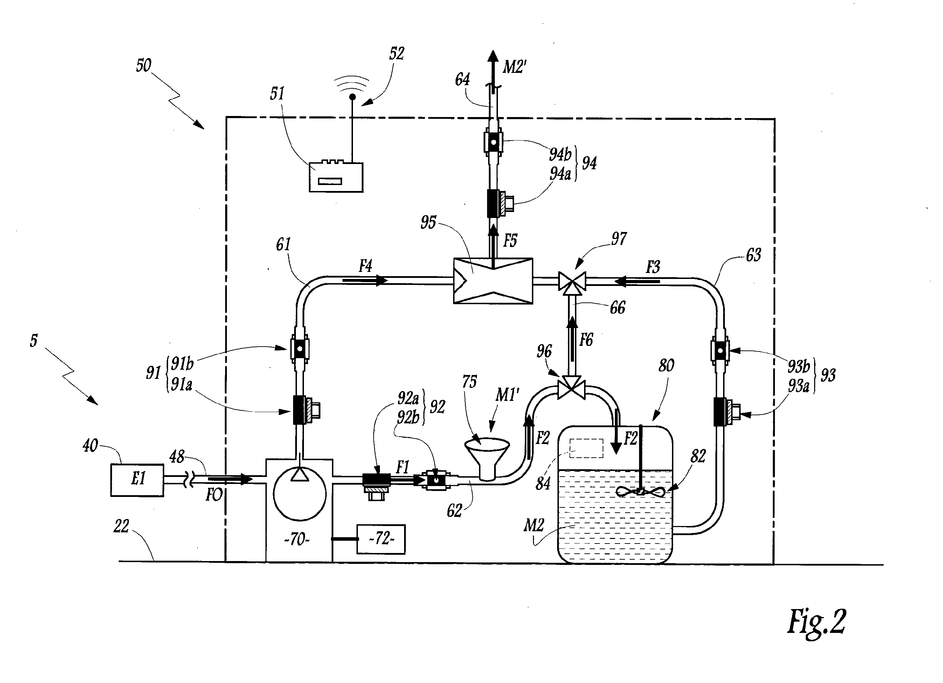

Sur les figures 1 et 2 est représenté un système 5 de remplissage d'une cuve 11.

Cette cuve 11 est disposée sur un véhicule pulvérisateur 1 de type tracteur agricole, tandis que le système 5 est disposé sur un véhicule semi-remorque 2 comprenant une partie avant 21 et une partie arrière 22. De préférence, chaque véhicule 1 ou 2 est piloté par un opérateur dédié.

La cuve 11 est prévue pour alimenter, avec un produit M3 prêt à pulvériser, une rampe de pulvérisation 16 agencée sur le véhicule 1. La cuve 11 présente, par exemple, une contenance de 5000 litres. Un dispositif 14 de détection du niveau de remplissage, représenté en pointillé sur la figure 1 et connu en soi, est positionné à l'intérieur de la cuve 11. Une antenne 12 de télécommunication est disposée sur la cuve 11 et reliée au dispositif 14. L'antenne 12 est configurée pour transmettre à distance des informations sur le niveau de liquide contenu par la cuve 11 et mesuré par le dispositif 14, c'est-à-dire sur le volume libre de la cuve 11 en vue de son remplissage. L'antenne 12 peut également transmettre d'autres informations, prises seules ou en combinaison, par exemple la position du véhicule 1 dans le champ, ou bien la ou les solutions liquides sélectionnées par l'opérateur pour le remplissage, ou la concentration souhaitée en matière active dans chaque solution.

Le véhicule 2 constitue un moyen de déplacement du système 5, ou d'au moins une partie du système 5. La partie avant 21 du véhicule 2 est motrice, de type tracteur agricole ou tracteur routier. Le tracteur 21 comprend une cabine de pilotage 31 surmontant un ensemble moteur 32. En particulier, l'ensemble moteur 32 du tracteur 21 peut comprendre une prise de force, non représentée à la figure 1. Cette prise de force est une pièce mécanique permettant de transmettre le couple du moteur à un autre dispositif mécanique, grâce à la rotation d'un arbre cannelé sur lequel ce dispositif vient s'emboîter.

En variante, la prise de force est hydraulique ou électrique. En pratique, son énergie vient du tracteur 21, qui doit rester en permanence en place.

Selon une autre variante, la prise de force peut être remplacée par un moteur thermique embarqué sur la remorque 22, devenue ainsi autonome.

La partie arrière 22 est une remorque qui repose de manière amovible sur le tracteur 21, au niveau d'une sellette 25 qui constitue une surface d'interface sensiblement plane. Lorsque la remorque 22 est dételée du tracteur 21, elle peut être appuyée sur le sol par l'intermédiaire de deux béquilles non représentées. Ainsi, la remorque 22 peut rester en place dans un champ tandis que le tracteur 21 se déplace, et peut sortir du champ pour tracter une autre remorque analogue à la remorque 22.

En variante non représentée, la remorque 22 ne comporte pas de sellette 25. Dans ce cas, la remorque peut être tractée à l'aide d'un crochet ou d'un anneau, et bloquée en position par des organes de freinage.

Sur la remorque 22 sont montés une citerne 40 contenant de l'eau E1, une réserve de matière active M1, et une unité 50 de préparation et de remplissage.

En variante non représentée, la citerne 40 et l'unité 50 peuvent être montées sur des remorques 22 distinctes. Dans le cas, le tracteur 21 peut se déplacer pour récupérer une nouvelle citerne 40, tandis que l'unité 50 reste en place dans le champ.

Par ailleurs, la réserve de matière active M1 peut être disposée à différents emplacements du véhicule 2, ou même à l'extérieur du véhicule 2, tout en étant facilement accessible et protégée des intempéries. Par exemple, la matière M1 peut se présenter sous la forme de conteneurs, sacs ou bidons empilés sur le plancher de remorque 22 au dos de la cabine 31, ou bien disposés dans un compartiment sous le plancher de la remorque 22, comme représenté sur la figure 1. En pratique, la matière M1 est un produit phytosanitaire utilisé pour soigner ou prévenir les maladies des organismes végétaux, par exemple un pesticide, un insecticide, un herbicide et/ou un engrais.

La citerne 40 présente des dispositifs 42 et 43 prévus pour son remplissage, qui comprennent par exemple des ouvertures d'accès munis de couvercles. Un dispositif 44 de détection du niveau de remplissage, représenté en pointillé sur la figure 1, est positionné à l'intérieur de la citerne 40. La citerne 40 est reliée à l'unité 50 par une conduite 48, laquelle présente de préférence une vanne hydraulique ou électrique, non représentée. La contenance de la citerne 40 en eau E1 est par exemple 35 000 litres, pour un poids total en charge du véhicule 2 inférieur à 44 tonnes.

Sur la figure 1, les véhicules 1 et 2 sont reliés par une conduite de liaison 64 pour permettre le remplissage de la cuve 11 par le système 5. Cette conduite de liaison 64 est un tuyau souple présentant des éléments de raccord du type raccord pompier, non représentés, à l'une de ses extrémités au moins, de sorte que la liaison résultante entre le système 5 et la cuve 11 est temporaire et amovible.

Toutefois, en pratique, l'unité 50 peut fonctionner sans que le véhicule 1 ne soit raccordé au véhicule 2 par la conduite 64, et sans que le véhicule 1 ne soit situé à proximité du véhicule 2. Au contraire, avantageusement, l'unité 50 est adaptée pour incorporer la matière M1 dans le système 5 et préparer un mélange concentré M2 lorsque le véhicule 1 est éloigné du véhicule 2. La préparation du mélange M2, préalablement au remplissage, permet un gain de temps lors du remplissage à proprement parler.

Comme visible sur la figure 2, l'unité 50 comprend un dispositif de commande 51, une pompe 70 entraînée par un actionneur 72, un incorporateur 75 de la matière active M1, une cuve de mélange 80 munie d'un agitateur 82 et d'un dispositif de détection de niveau 84, un aspirateur venturi 95, ainsi que des dispositifs hydrauliques 91, 92, 93, 94, 96 et 97 de contrôle des flux de liquide F1, F2, F3, F4, F5 et F6 dans différentes conduites 61, 62, 63, 64 et 66.

Le dispositif de commande 51 est relié par des câbles électriques, non représentés, à chacun des éléments précités constituant l'unité 50. En pratique, le dispositif de commande 51 est configuré pour commander chacun de ces éléments 70, 72, 75, 82, 84, 91, 92, 93, 94, 95, 96 et 97.

Par ailleurs, le dispositif de commande 51 est équipé d'une antenne 52 de télécommunication adaptée pour recevoir des signaux en provenance de l'antenne 12 de la cuve 11, par exemple pour recevoir un ordre de préparation de mélange concentré M2 ou pour connaître le volume libre de la cuve 11. Ainsi, le système 5 peut connaître les besoins en remplissage de la cuve 11, et commander chaque élément de l'unité 50 de manière adaptée et anticipée, avant que le tracteur 1 ne soit au voisinage du véhicule 2, c'est-à-dire pendant que le tracteur pulvérise le produit M3 avec sa rampe 16. L'utilisation de moyens de communication sans fil complémentaires, à savoir les antennes 12 et 52, permet donc de simplifier la mise en oeuvre du système selon l'invention et réduire le temps nécessaire pour procéder aux opérations de remplissage. Les moyens de communication sans fil peuvent utiliser un système hertzien, infrarouge, wifi ou tout autre système adapté.

La pompe 70 est une pompe centrifuge, connue en soi. Un telle pompe 70 présente un débit important et est adaptée pour transférer environ 2000 litres de solution liquide par minute. L'actionneur 72 est, de préférence, un moteur hydraulique qui est entraîné par une pompe, laquelle est couplée à la prise de force équipant l'ensemble moteur 32 du tracteur 21 par un dispositif de couplage 33, représenté en pointillés sur la figure 1.

En variante, la pompe 70 peut être entrainée électriquement, hydrauliquement ou mécaniquement par un actionneur qui est disposé sur la remorque 22. Cet actionneur est par exemple du type moteur thermique, moteur électrique ou groupe électrogène. Dans ce cas, la pompe 70 et l'actionneur 72 sont indépendants du tracteur 21, qui peut aller chercher une autre citerne similaire à la citerne 40 sans empêcher le fonctionnement de l'unité 50.

En variante non représentée, la pompe 70, ou une autre pompe similaire, est prévue pour assurer également le remplissage de la citerne 40, à partir d'un point d'eau (un bac, un étang ou une rivière), en modifiant son aspiration (directe depuis le point d'eau) et son refoulement (direct vers la citerne 40) par l'intermédiaire de vannes, également non représentées mais dont le fonctionnement est connu en soi.

En pratique, la pompe 70 est configurée pour recevoir un flux F0 d'eau E1 en provenance de la citerne 40 par l'intermédiaire de la conduite 48. Ce flux F0 peut être réparti par la pompe 70 entre le flux F1 circulant dans la conduite 62 et le flux F4 circulant dans la conduite 61.

La conduite 61 est munie du dispositif de contrôle hydraulique 91 et relie la pompe 70 à l'aspirateur venturi 95.

La conduite 62 est munie du dispositif de contrôle hydraulique 92 et de l'incorporateur 75 pour l'incorporation de matière active M1 dans le système 5, plus précisément dans le flux F1. Cette incorporation est manuelle et représentée par une flèche M1' à la figure 2. De ce fait, en aval de l'incorporateur 75, le flux F2 contenant de l'eau E1 et de la matière active M1 circule dans la conduite 62 jusqu'à la cuve de mélange 80. En fonction du produit utilisé comme matière active M1, l'incorporateur 75 peut comprendre un dispositif incorporateur à venturi, une pompe ou un autre matériel adapté à sa fonction.

En variante non représentée, un dispositif est prévu pour transférer automatiquement la matière M1 dans l'incorporateur 75, avec un dosage contrôlé. Dans ce cas, l'incorporation est effectuée sans intervention manuelle, par le biais d'un organe commandé par le dispositif 51.

La cuve de mélange 80, qui présente par exemple une contenance de 500 litres, reçoit le flux F2 de mélange concentré M2 formé d'eau E1 et de matière active M1. A ce stade, la concentration M1/E1 du mélange concentré M2 est connue et maîtrisée en fonction de la quantité de matière active M1 introduite dans l'incorporateur 75 et de la quantité d'eau E1 pompée dans la conduite 62 jusqu'à la cuve 80. De préférence, cette concentration M1/E1 est égale à 10 fois la concentration souhaitée pour le remplissage de la cuve 11 en produit M3.

L'agitateur 82 est disposé dans la cuve de mélange 80 et permet de maintenir le mélange concentré M2 en suspension, tout en évitant le moussage et la formation de dépôts. Le dispositif 84 est adapté pour détecter en continu le niveau de liquide en suspension dans la cuve de mélange 80, et donc le volume de mélange concentré M2 présent dans la cuve de mélange 80, et en informer le dispositif de commande 51.

La conduite 63, qui est munie du dispositif de contrôle hydraulique 93 et dans laquelle circule le flux F3, relie la cuve de mélange 80 à l'aspirateur venturi 95.

En variante non représentée, une pompe centrifuge peut être disposée sur la conduite 63 en sortie de la cuve de mélange 80 afin de pomper le mélange concentré M2 en direction de l'aspirateur venturi 95 en formant le flux F3. Dans ce cas, cet aspirateur venturi 95 n'est pas nécessaire et peut être remplacé par une vanne 3 voies ou un simple Y de raccordement.

Cet aspirateur venturi 95 forme un dispositif confluent, autrement dit des moyens de confluence des flux F3 et F4. En particulier, l'aspirateur venturi 95 est configuré pour accélérer les flux F3 et F4 au niveau d'un rétrécissement de la zone de circulation de fluide. En outre, un tel aspirateur venturi 95 permet de mélanger les liquides : le flux F4 d'eau E1 est mis en dépression pour aspirer le flux F3 de mélange concentré M2. En se mélangeant, les flux F3 et F4 forment un flux F5 de mélange dilué M2', représenté par une flèche à la figure 2, qui est projeté dans la conduite 64 en direction de la cuve 11. Dans ce cas, les flux F3 et F4 sont contrôlés par les dispositif hydrauliques correspondants 91 et 93, comme détaillé ci-après.

Chaque dispositif hydraulique 91, 92, 93 et 94 présente une vanne, respectivement 91a, 92a, 93a et 94, ainsi qu'un débitmètre, respectivement 91 b, 92b, 93b et 94b. Chaque vanne 91 a à 94a peut être ouverte et fermée par le dispositif de commande 51 pour faire varier le débit de liquide dans la conduite correspondante 61 à 64, voire même couper le flux de liquide correspondant F1 à F5. Chaque débitmètre 91 b à 94b est configuré pour mesurer le débit de liquide en continu et en informer le dispositif de commande 51.

Plus précisément, le dispositif 91 permet de contrôler le flux F4 lors du remplissage de la cuve 11. Le dispositif 92 permet de contrôler les flux F1 et F2 lors de la préparation du mélange concentré M2 dans la cuve de mélange 80, et les couper si besoin lors du remplissage de la cuve 11. Le dispositif 93 permet de contrôler le flux F3 en sortie de la cuve de mélange 80, afin de s'assurer que la quantité désirée de mélange concentré M2 est envoyée à l'aspirateur venturi 95, puis en direction de la cuve 11. Le dispositif 94 permet de contrôler le flux F5 de remplissage de la cuve 11, en particulier de s'assurer que ce remplissage n'est effectué que lorsque la conduite 64 est reliée à la cuve 11. Egalement, le dispositif 94 permet de couper le flux F5 lorsque la cuve 11 est correctement remplie, et ainsi éviter le débordement de la cuve 11.

En pratique, le flux F5 dirigé vers la cuve 11 peut donc contenir de l'eau E1 lorsque la vanne 93a est fermée, du mélange concentré M2 lorsque les vannes 91 a et 92a sont fermées, ou du mélange dilué M2' lorsque les vannes 91 a et 93a sont ouvertes.

De manière avantageuse mais non obligatoire, l'unité 50 est équipée de la conduite 66, ainsi que des dispositifs 96 et 97. Plus précisément, le dispositif 96 est disposé sur la conduite 62 entre l'incorporateur 75 et le réservoir 80, tandis que le dispositif 97 est disposé sur la conduite 63 entre le dispositif 93 et l'aspirateur 95. Ces dispositifs 96 et 97 sont reliés par la conduite 66 et chacun d'eux est constitué par une vanne 3 voies. Ainsi, la matière active M1' versée dans l'incorporateur 75 peut être transférée sélectivement dans la cuve de mélange 80 selon le flux F2 ou directement en amont de l'aspirateur 95 selon le flux F6 circulant dans la conduite 66. Cette variante permet d'incorporer, au liquide E1 venant de la citerne 40, des matières actives à courte durée de vie une fois diluées, en mixant au dernier moment la juste dose de matière active M1 au liquide E1. Dans ce cas, l'écoulement de flux F2 peut être canalisé dans la conduite 66 selon un écoulement de flux F6 sans passer par la cuve 80 de pré-mélange concentré M2. En outre, les dispositifs 91 et 92 et/ou le dispositif 94 suffisent à mesurer et à stopper le remplissage de la cuve 11.

Selon une autre variante complémentaire de la précédente, le dispositif 97 et l'aspirateur 95 peuvent être conjointement remplacés par une vanne 4 voies.

L'unité 50 du système 5 est donc prévue, d'une part, pour la préparation du mélange concentré M2 à base d'eau E1 et de matière active M1 puis, d'autre part, pour le remplissage de la cuve 11 avec un produit M3 destiné à être pulvérisé. Toutefois, l'unité 50 est également apte à verser dans la cuve 11 uniquement de l'eau E1, ou uniquement du mélange concentré M2, ou uniquement du mélange dilué M2'.

Ainsi, l'unité 50 équipant le système de remplissage 5 permet un gain de temps très avantageux, avec le remplissage de la cuve 11 qui est effectué d'une seule traite sans manipulations intermédiaires. En effet, on ne remplit pas la cuve 11 uniquement avec le mélange concentré M2 dans un premier temps, puis avec l'eau E1 en complément dans un deuxième temps. Au contraire, selon un mode de remplissage rapide, la cuve 11 est remplie de produit M3 en transférant d'abord le mélange M2', constitué par aspiration de la quantité prévue du pré-mélange M2 grâce au venturi 95 et au flux d'eau F4 venant de la citerne 40, puis en faisant le complément en eau E1 sans interruption ni manipulation. Selon un mode de remplissage plus progressif, le mélange M2' est obtenu en mélangeant dans l'aspirateur venturi 95 et le conduit 64, directement lors du remplissage, une quantité prédéterminé d'eau E1 et de mélange M2, par exemple 1/10 de mélange M2 et 9/10 d'eau E1, ce qui correspond en d'autres termes à la déconcentration du pré-mélange M2.

A ce stade, on remarque que le système de remplissage 5 présente des « moyens de préparation » et des « moyens de sélection », constitués respectivement d'une partie des éléments de l'unité 50. Plus précisément, les moyens de préparation du mélange concentré M2 comprennent les éléments 40, 50, 51, 70, 75, 80 et 92, tandis que les moyens de sélection de la solution liquide E1, M2, M2' (E1+M2) ou M3 (M2' puis E1) qui est envoyée à la cuve 11 comprennent les éléments 50, 51, 70, 91, 93, 94, 95, 96 et 97.

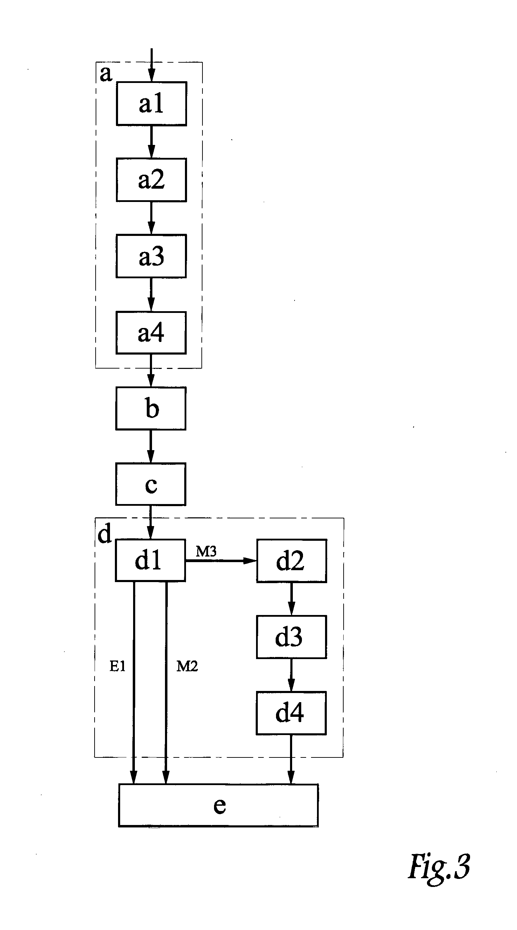

Sur la figure 3 est représenté un logigramme du procédé de remplissage de la cuve 11 conforme à l'invention. En particulier, ce procédé est adapté à la mise en oeuvre du système de remplissage 5.

A ce stade, on relève que le dispositif de commande 51 équipant le système 5 est configuré pour recevoir des signaux en provenance de la cuve 11 par l'intermédiaire des moyens de communication complémentaires 12 et 52, avant ou pendant la mise en oeuvre du procédé de remplissage de la cuve. En particulier, ces signaux peuvent transmettre un ordre de préparation du mélange concentré M2 au système 5, cet ordre initiant le procédé de remplissage selon l'invention.

Dans une étape « a », on incorpore une certaine quantité de matière active M1, à l'aide de moyens d'incorporation comprenant l'incorporateur 75, dans le système de remplissage 5. A cet effet, le système 5 comprend un premier réservoir, à savoir la cuve de mélange 80, ainsi qu'un deuxième réservoir configuré pour contenir une deuxième solution liquide, à savoir la citerne 40 contenant de l'eau E1. La matière active M1 est incorporée dans la cuve de mélange 80 configurée pour contenir le mélange concentré M2.

Plus précisément, cette étape a comprend des sous-étapes a1, a2, a3 et a4.

Dans l'étape a1, un ordre de préparation de mélange concentré M2, adapté au remplissage de la cuve 11 de pulvérisateur, est transmis au dispositif de commande 51 du système de remplissage 5. Cet ordre de préparation est transmis par le l'opérateur du véhicule pulvérisateur 1, ou bien de manière automatique par le dispositif 14, lorsque le niveau de produit M3 dans la cuve 11 descend en dessous d'une limite prédéterminée.

Dans l'étape a2, une quantité prédéterminée de matière active M1 est incorporée dans le système de remplissage 5, en amont du premier réservoir ou dans ce premier réservoir, à savoir la cuve de mélange 80. Cette incorporation est effectuée manuellement par l'opérateur du véhicule 2, ou bien de manière automatique dans le cas où la réserve de matière active M1 est reliée à l'incorporateur 75.

Dans l'étape a3, la pompe 70 transfère un volume prédéterminé de la deuxième solution liquide E1, qui est de préférence de l'eau pure, vers le premier réservoir 80.

Dans l'étape a4, l'unité 50 du système 5 prépare le mélange concentré M2 dans le premier réservoir 80 en mélangeant la matière active M1 et la deuxième solution liquide E1 en proportions prédéterminées M1/E1. Par ailleurs, dans cette étape a4, le mélange concentré M2 est brassé à l'aide de l'agitateur 82, afin d'éviter le moussage et la formation de dépôts, jusqu'à ce que le pulvérisateur arrive à proximité du système 5 pour le remplissage de la cuve 11.

Dans une étape « b », l'un des opérateurs relie le système de remplissage 5 et la cuve 11 à remplir à l'aide des moyens de liaison du système 5 à la cuve 11, à savoir la conduite 64.

Dans une étape « c », un ordre de remplissage est transmis au dispositif de commande 51. Cet ordre est transmis par l'un des opérateurs, ou bien de manière automatique dans le cas où le dispositif de commande 51 est configuré pour détecter que la liaison entre le système 5 et la cuve 11 est correctement effectuée. La vanne 94a est alors ouverte pour permettre le passage du flux F5 dans la conduite 64 reliant l'unité 50 et la cuve 11. Les vannes 91 a et 93a sont ouvertes ou fermées en fonction de la solution liquide E1, M2 ou M2' sélectionnée pour le remplissage de la cuve 11.

Par ailleurs, on remarque que la cuve 11 de pulvérisateur 1 n'est pas toujours vide au moment de la recharge. Le dosage de la matière active M1, qui est incorporée au système 5 mais destinée à la cuve 11, doit donc être maîtrisé pour optimiser les mélanges M2 et/ou M2'. Egalement, les flux F3, F4 et F5 doivent être contrôlés par le dispositif de commande 51. Par exemple, si la cuve 11 a besoin de 4000 litres de produit M3, elle doit être remplie avec 400 litres de mélange concentré M2 préparé au préalable et 3 600 litres d'eau E1. Ces différents aspects sont prévus lors de la transmission de l'ordre de préparation de l'étape a1 et de l'ordre de remplissage de l'étape c.

Avantageusement, le système 5 et le procédé de remplissage sont adaptés pour réaliser l'étape a préalablement à l'étape b. Cela permet un gain de temps conséquent puisque la matière active M1 est déjà incorporée au système 5, autrement dit les mélanges M2 ou M103 sont déjà préparés, au moment où le remplissage est initié dans l'étape c.

Dans une étape « d », le dispositif de commande 51 actionne des moyens 70 de pompage équipant le système de remplissage 5 et configurés pour remplir sélectivement la cuve 11 avec la ou les solutions liquides E1, M2, M2' (E1+M2) ou M3 (M2' puis E1) par l'intermédiaire des moyens de liaison 64. Ces moyens de pompage comprennent au moins la pompe centrifuge 70. D'autres pompes, non représentées sur les figures 1 et 2, peuvent être intégrées au système 5 pour faciliter le remplissage de la cuve 11 en contrôlant les flux F1, F2, F3, F4 et/ou F5.

En pratique, la première solution est le mélange concentré M2, la deuxième solution est l'eau pure E1, et la troisième solution est le mélange dilué M2'. Dans ce cas, l'étape d comprend de préférence au moins une sous-étape d1 consistant à sélectionner la solution liquide E1, M2, M2' ou M3 qui est envoyée à la cuve 11 parmi au moins : la première solution liquide M2, la deuxième solution liquide E1, et une troisième solution liquide M2' qui est un mélange des première et deuxième solutions liquides M2 et E1 en proportions prédéterminées M2/E1. Autrement dit, le système 5 est configuré pour s'adapter aux besoins en remplissage de la cuve 11, au choix de l'opérateur. Par exemple, l'opérateur peut commander le rinçage par l'eau E1, ou bien la recharge en mélange concentré M2 seul pour augmenter la concentration en matière active M1 dans la cuve 11. Toutefois, l'application principale est le remplissage de la cuve 11 en produit M3 à grande vitesse, c'est-à-dire en moins de trois minutes, à partir du mélange dilué M2' et du complément en eau E1.

En outre, comme visible sur la figure 3, lorsque la solution liquide sélectionnée dans l'étape d1 est la troisième solution liquide M2', l'étape d comprend également des sous-étapes d2, d3 et d4 succédant à l'étape d1.

Dans l'étape d2, le dispositif de commande 51 actionne les moyens 70 de pompage pour remplir la cuve 11 simultanément avec le mélange M2' comprenant la première solution liquide M2 et la deuxième solution liquide E1. L'aspirateur venturi 95 permet de mélanger les flux F3 et F4 pour obtenir le flux F5 de remplissage.

Dans l'étape d3, lorsque le premier réservoir 80 contenant la première solution liquide M2 est vide ou contient un niveau de liquide prédéterminé correspondant aux besoins en remplissage de la cuve 11, une information correspondante est détectée et transmise au dispositif de commande 51, notamment grâce aux dispositifs 94 et/ou 93b.

Enfin, dans l'étape d4, le dispositif de commande 51 actionne les moyens 70 de pompage pour complémenter le remplissage de la cuve 11 avec la deuxième solution liquide E1, de manière que la cuve 11 pleine contienne une troisième solution liquide M3 qui est un mélange des première et deuxième solutions liquides M2 et E1 en proportions prédéterminées M2/E1.

Ainsi, le système 5 et le procédé de remplissage sont adaptés pour remplir sélectivement la cuve 11 avec l'une ou l'autre solution liquide E1, M2, M2' (E1+M2) ou M3 (M2' puis E1).

Dans une étape « e », l'opérateur déconnecte les moyens 64, 94 de liaison entre le système 5 et la cuve 11 lorsque le niveau de remplissage souhaité de la cuve 11 est atteint. Ce niveau est prédéterminé et dépend notamment de l'ordre de remplissage de l'étape c, qui peut correspondre un remplissage complet ou partiel de la cuve 11.

De préférence, les étapes a, b, c, d et e sont successives.

Selon une alternative, l'étape a peut être différée après les étapes b, c et d, mais avant l'étape e. Dans ce cas, cette étape a consiste à incorporer la matière active M1 entre le premier réservoir 80 et les moyens de liaison du système de remplissage 5 à la cuve 11, par l'intermédiaire de la conduite 66 et des dispositifs 96 et 97. En pratique, cette étape a peut être sélectivement différée par l'unité 50.

De manière générale, la mise en oeuvre du système 5 et/ou du procédé de remplissage associé permet de remplir la cuve 11 en moins de trois minutes, avec une concentration maîtrisée en matière active M1 de type produit phytosanitaire. L'utilisation de la remorque mobile 22, comprenant la citerne 40 et l'unité 50 de préparation et de remplissage, permet d'éviter les trajets importants pour le ravitaillement en eau du pulvérisateur tout en réduisant les risques de pollution des voiries sur le trajet de retour aux champs.

Ainsi, le rendement du ou des pulvérisateurs est augmenté, d'une part, en réduisant le temps d'incorporation de matière active et de remplissage de la cuve de chaque pulvérisateur et, d'autre part, en réduisant le temps de trajet de chaque pulvérisateur sans pulvérisation au profit du temps effectif de pulvérisation dans le champ ou le verger.

## Revendications

1. Système (5) de remplissage d'une cuve (11) de pulvérisateur avec au moins une solution liquide (E1, M2, M2', M3), comprenant :
- au moins un premier réservoir (80) configuré pour contenir une première solution liquide (M2),
- des moyens (64, 94) de liaison temporaire du système (5) à la cuve (11),
- des moyens (75) d'incorporation d'une matière active (M1) dans le premier réservoir (80) ou entre le premier réservoir et les moyens de liaison (64, 94), et
- des moyens (70) de pompage commandés par un dispositif de commande (51) et configurés pour remplir sélectivement la cuve (11) avec la ou les solutions liquides (E1, M2, M2', M3),
**caractérisé en ce que** le système (5) comprend un deuxième réservoir (40) configuré pour contenir une deuxième solution liquide (E1) et également des moyens (40, 50, 51, 70, 75, 80, 92) de préparation de la première solution liquide (M2) qui sont commandés par le dispositif de commande (51) et qui sont configurés pour préparer cette première solution liquide (M2) dans le premier réservoir (80) en mélangeant la deuxième solution liquide (E1) et la matière active (M1) en proportions prédéterminées (M1/E1), et **en ce que** les moyens (40, 50, 51, 70, 75, 80, 92) de préparation de la première solution liquide (M2) comprennent au moins, d'une part, les moyens (75) d'incorporation de matière active (M1) qui sont positionnés entre le premier réservoir (80) et le deuxième réservoir (40) et, d'autre part, des moyens (82) agitateurs configurés pour maintenir la première solution liquide (M2) en suspension dans le premier réservoir (80).

2. Système (5) selon la revendication 1, **caractérisé en ce qu'**il comprend une unité (50) de préparation et de remplissage, adaptée pour incorporer la matière active (M1) dans le système (5), cette unité (50) comprenant :
- le dispositif de commande (51),
- le premier réservoir (80),
- les moyens (75) d'incorporation, et
- les moyens (70) de pompage configurés pour remplir sélectivement la cuve (11) avec la ou les solutions liquides (E1, M2, M2', M3), d'une seule traite sans manipulations intermédiaires.

3. Système (5) selon la revendication 2, **caractérisé en ce que** le deuxième réservoir (40) et l'unité (50) de préparation et de remplissage sont montés sur une même remorque (22).

4. Système (5) selon la revendication 2, **caractérisé en ce que** le deuxième réservoir (40) et l'unité (50) de préparation et de remplissage sont montés sur des remorques (22) distinctes.

5. Système (5) selon l'une des revendications précédentes, **caractérisé en ce que** les moyens (40, 50, 51, 70, 75, 80, 92) de préparation de la première solution liquide (M2) fonctionnent alors que le système (5) n'est pas raccordé à la cuve (11) par les moyens (64, 94) de liaison temporaire.

6. Système (5) selon l'une des revendications précédentes, **caractérisé en ce que** le système (5) comprend un dispositif de transfert automatique, avec un dosage contrôlé, de la matière active (M1) vers les moyens d'incorporation (75) positionnés entre le premier réservoir (80) et le deuxième réservoir (40).

7. Système (5) selon l'une des revendications précédentes, **caractérisé en ce que** le système (5) comprend également des moyens (50, 51, 70, 91, 93, 94, 95, 96, 97) de sélection de la solution liquide (E1 ; M2 ; M2' ; M3) qui est envoyée à la cuve (11) parmi au moins : la première solution liquide (M2), une deuxième solution liquide (E1) et une troisième solution liquide (M3) qui est un mélange des première et deuxième solutions liquides (M2 ; E1) en proportions prédéterminées (M2/E1).

8. Système (5) selon l'une des revendications précédentes, **caractérisé en ce que** le système (5) comprend également des moyens (50, 51, 70, 91, 93, 94, 95) de sélection de la solution liquide (E1 ; M2 ; M2' ; M3) qui est envoyée à la cuve (11), ces moyens (50, 51, 70, 91, 93, 94, 95, 96, 97) de sélection comprenant au moins :
- des moyens (95) de confluence positionnés en amont des moyens (64, 94) de liaison temporaire du système (5) à la cuve (11),
- un premier dispositif de vanne (92) positionné entre le premier réservoir (80) contenant la première solution (M2) et les moyens (95) de confluence, et
- un deuxième dispositif de vanne (91) positionné entre le deuxième réservoir (40) contenant la deuxième solution (E1) et les moyens (95) de confluence,
et **en ce que** le dispositif de commande (51) est configuré, d'une part, pour ouvrir ou fermer sélectivement chaque dispositif de vanne (91, 92) et, d'autre part, pour ouvrir ou couper la circulation d'un flux (F5) de remplissage dans les moyens (64, 94) de liaison.

9. Système (5) selon la revendication 8, **caractérisé en ce que** les moyens (95) de confluence sont formés par un aspirateur venturi.

10. Système (5) selon l'une des revendications précédentes, **caractérisé en ce que** le premier réservoir (80) comprend un dispositif (84) de détection du niveau de la première solution liquide (M2) en suspension dans le premier réservoir (80)

11. Système (5) selon l'une des revendications précédentes, **caractérisé en ce que** le dispositif de commande (51) est équipé de moyens (52) de communication qui sont configurés pour recevoir des informations en provenance de la cuve (11), ces informations étant choisies parmi les suivantes : la position relative entre le système (5) et la cuve (11), le volume libre de la cuve (11) devant être rempli, la ou les solutions liquides (E1 ; M2 ; M2' ; M3) sélectionnées pour le remplissage de la cuve (11), la concentration souhaitée en matière active (M1) dans chaque solution (M2 ; M2' ; M3), ou une combinaison de certaines d'entre elles.

12. Procédé de remplissage d'une cuve (11) de pulvérisateur, comprenant au moins les étapes suivantes :
a) incorporer une matière active (M1) dans un système de remplissage (5) comprenant au moins un premier réservoir (80) configuré pour contenir une première solution liquide (M2), comprenant les étapes
a1) transmettre un ordre de préparation de mélange concentré (M2) au système de remplissage (5),
a2) incorporer une quantité prédéterminée de matière active (M1) dans le système de remplissage (5), en amont du premier réservoir (80) ou dans le premier réservoir (80),
b) relier le système de remplissage (5) et la cuve (11) de pulvérisateur à remplir à l'aide de moyens (64, 94) de liaison du système de remplissage (5) à la cuve (11),
c) transmettre un ordre de remplissage à un dispositif de commande (51) équipant le système de remplissage (5),
d) actionner des moyens (70) de pompage qui équipent le système de remplissage (5), qui sont commandés par le dispositif de commande (51) et qui sont configurés pour remplir sélectivement la cuve (11) avec la ou les solutions liquides (E1, M2, M2', M3), et
e) déconnecter les moyens (64, 94) de liaison entre le système (5) et la cuve (11) lorsque la cuve est remplie à un niveau prédéterminé,
le procédé étant **caractérisé en ce que** l'étape a) comprend les sous-étapes suivantes :
a3) transférer un volume prédéterminé de la deuxième solution liquide (E1), qui est de préférence de l'eau pure, vers le premier réservoir (80), et
a4) préparer le mélange concentré (M2) dans le premier réservoir (80) en mélangeant la matière active (M1) et la deuxième solution liquide (E1) en proportions prédéterminées (M1/E1).

13. Procédé selon la revendication 12, **caractérisé en ce que** l'étape d) comprend au moins une sous-étape d1) consistant à sélectionner la solution liquide (E1 ; M2 ; M2' ; M3) qui est envoyée à la cuve (11) parmi au moins : la première solution liquide (M2), la deuxième solution liquide (E1), et une troisième solution liquide (M3) qui est un mélange des première et deuxième solutions liquides (M2, E1) en proportions prédéterminées (M2/E1).

14. Procédé selon la revendication 13, **caractérisé en ce que** lorsque la solution liquide (E1 ; M2 ; M2' ; M3) sélectionnée est la troisième solution liquide (M3), l'étape d) comprend également les sous-étapes suivantes succédant à l'étape d1) :
d2) actionner les moyens (70) de pompage à l'aide du dispositif de commande (51) pour remplir la cuve (11) simultanément avec un mélange (M2') de la première solution liquide (M2) et la deuxième solution liquide (E1),
d3) détecter lorsque le premier réservoir (80) contenant la première solution liquide (M2) est vide ou contient un niveau de liquide (M2) prédéterminé, et transmettre cette information au dispositif de commande (51),
d4) actionner les moyens (70) de pompage à l'aide du dispositif de commande (51) pour complémenter le remplissage de la cuve (11) avec la deuxième solution liquide (E1), de manière que la cuve (11) pleine contienne une troisième solution liquide (M3) qui est un mélange des première et deuxième solutions liquides (M2, E1) en proportions prédéterminées (M2/E1).

15. Procédé selon la revendication 12, **caractérisé en ce que** l'étape a) est différée après les étapes b), c) et d), et **en ce que** cette étape a) consiste à incorporer la matière active (M1) entre le premier réservoir et les moyens de liaison (64, 94).

## Patentansprüche

1. System (5) zum Befüllen eines Sprühbehälters (11) mit mindestens einer flüssigen Lösung (E1, M2, M2', M3), umfassend:
- mindestens einen ersten Vorratsbehälter (80), der dazu ausgebildet ist, eine erste flüssige Lösung (M2) zu enthalten,
- Verbindungsmittel (64, 94) zur zeitweiligen Verbindung des Systems (5) mit dem Behälter (11),
- Beimengungsmittel (75) zur Beimengung eines aktiven Stoffs (M1) in den ersten Vorratsbehälter (80) oder zwischen dem ersten Vorratsbehälter und den Verbindungsmitteln (64, 94), und
- Pumpmittel (70), die von einer Steuereinrichtung (51) gesteuert sind und dazu ausgebildet sind, den Behälter (11) wahlweise mit der oder den flüssigen Lösung(en) (E1, M2, M2', M3) zu befüllen, **dadurch gekennzeichnet,**
**dass** das System (5) einen zweiten Vorratsbehälter (40) umfasst, der dazu ausgebildet ist, eine zweite flüssige Lösung (E1) zu enthalten, sowie Herstellungsmittel (40, 50, 51, 70, 75, 80, 92) zum Herstellen der ersten flüssigen Lösung (M2), die von der Steuereinrichtung (51) gesteuert sind und die dazu ausgebildet sind, die erste flüssige Lösung (M2) in dem ersten Vorratsbehälter (80) durch Mischen der zweiten flüssigen Lösung (E1) und des aktiven Stoffs (M1) in vorbestimmten Proportionen (M1/E1) herzustellen, und dass die Herstellungsmittel (40, 50, 51, 70, 75, 80, 92) zum Herstellen der ersten flüssigen Lösung (M2) zumindest einerseits die Beimengungsmittel (75) zur Beimengung des aktiven Stoffs (M1), die zwischen dem ersten Vorratsbehälter (80) und dem zweiten Vorratsbehälter (40) angeordnet sind, und andererseits Rührmittel (82), die dazu ausgebildet sind, die erste flüssige Lösung (M2) in dem ersten Vorratsbehälter (80) in Suspension zu halten, umfassen.

2. System (5) nach Anspruch 1,
**dadurch gekennzeichnet,**
**dass** es eine Herstellungs- und Befülleinheit (50) umfasst, die dazu ausgebildet ist, den aktiven Stoff (M1) in das System (5) einzubringen, wobei die Einheit (50) Folgendes umfasst:
- die Steuereinrichtung (51),
- den ersten Vorratsbehälter (80),
- die Beimengungsmittel (75), und
- die Pumpmittel (70), die dazu ausgebildet sind, den Behälter (11) wahlweise mit der oder den flüssigen Lösung(en) (E1, M2, M2', M3) in einem Zug ohne Zwischenschritte zu befüllen.

3. System (5) nach Anspruch 2,
**dadurch gekennzeichnet,**
**dass** der zweite Vorratsbehälter (40) und die Herstellungs- und Befülleinheit (50) auf demselben Anhänger (22) gelagert sind.

4. System (5) nach Anspruch 2,
**dadurch gekennzeichnet,**
**dass** der zweite Vorratsbehälter (40) und die Herstellungs- und Befülleinheit (50) auf verschiedenen Anhängern (22) gelagert sind.

5. System (5) nach einem der vorhergehenden Ansprüche,
**dadurch gekennzeichnet,**
**dass** die Herstellungsmittel (40, 50, 51, 70, 75, 80, 92) zum Herstellen der ersten flüssigen Lösung (M2) auch dann funktionieren, wenn das System (5) nicht durch die zeitweiligen Verbindungsmittel (64, 94) mit dem Behälter (11) verbunden ist.

6. System (5) nach einem der vorhergehenden Ansprüche,
**dadurch gekennzeichnet,**
**dass** das System (5) eine automatische Transfervorrichtung mit einer kontrollierten Dosierung zum Transferieren des aktiven Stoffs (M1) zu den zwischen dem ersten Vorratsbehälter (80) und dem zweiten Vorratsbehälter (40) angeordneten Beimengungsmitteln (75) umfasst.

7. System (5) nach einem der vorhergehenden Ansprüche,
**dadurch gekennzeichnet,**
**dass** das System (5) außerdem Auswählmittel (50, 51, 70, 91, 93, 94, 95, 96, 97) zum Auswählen der flüssigen Lösung (E1; M2; M2'; M3) umfasst, die zu dem Behälter (11) geschi ckt wird und ausgewählt ist aus der ersten flüssigen Lösung (M2), einer zweiten flüssigen Lösung (E1) und einer dritten flüssigen Lösung (M3), die eine Mischung aus der ersten und zweiten flüssigen Lösung (M2; E1) in vorbestimmten Proportionen (M2/E1) ist.

8. System (5) nach einem der vorhergehenden Ansprüche,
**dadurch gekennzeichnet,**
**dass** das System (5) außerdem Auswählmittel (50, 51, 70, 91, 93, 94, 95) zum Auswählen der flüssigen Lösung (E1; M2; M2'; M3), die zum Behälter (11) geschickt wird, umfasst, wobei die Auswählmittel (50, 51, 70, 91, 93, 94, 95, 96, 97) zumindest Folgendes umfassen:
- Mündungsmittel (95), die den Verbindungsmitteln (64, 94) zur zeitweiligen Verbindung des Systems (5) mit dem Behälter (11) vorgeschaltet angeordnet sind,
- eine erste Ventileinrichtung (92), die zwischen dem die erste Lösung (M2) enthaltenden ersten Vorratsbehälter (80) und den Mündungsmitteln (95) angeordnet ist, und
eine zweite Ventileinrichtung (91), die zwischen dem die zweite Lösung (E1) enthaltenden zweiten Vorratsbehälter (40) und den Mündungsmitteln (95) angeordnet ist,
und **dass** die Steuereinrichtung (51) einerseits dazu ausgebildet ist, jede Ventileinrichtung (91, 92) wahlweise zu öffnen oder zu schließen und andererseits die Zirkulation einer Füllströmung (F5) in den Verbindungsmitteln (64, 94) freizugeben oder zu unterbrechen.

9. System (5) nach Anspruch 8,
**dadurch gekennzeichnet,**
**dass** die Mündungsmittel (95) von einem Venturi-Sauger gebildet sind.

10. System (5) nach einem der vorhergehenden Ansprüche,
**dadurch gekennzeichnet,**
**dass** der erste Vorratsbehälter (80) ein Erkennungsmittel (84) zum Erkennen des Pegels der ersten flüssigen Suspensionslösung (M2) in dem ersten Vorratsbehälter (80) umfasst.

11. System (5) nach einem der vorhergehenden Ansprüche,
**dadurch gekennzeichnet,**
**dass** die Steuereinrichtung (51) mit Kommunikationsmitteln (52) versehen ist, die dazu ausgebildet sind, Informationen von dem Behälter (11) zu empfangen, wobei die Informationen aus den folgenden ausgewählt sind: der Position des Systems (5) relativ zu dem Behälter (11), dem freien Volumen des Behälters (11) vor dem Befüllen, der oder den zum Befüllen des Behälters (11) ausgewählten Lösung(en) (E1; M2; M2'; M3), der gewünschten Konzentration des aktiven Stoffs (M1) in jeder Lösung (M2; M2'; M3) oder einer Kombination einiger dieser Informationen.

12. Verfahren zum Befüllen eines Sprühbehälters (11), das mindestens die folgenden Schritte umfasst:
a) Beimengung eines aktiven Stoffs (M1) in ein Befüllsystem (5), das mindestens einen ersten Vorratsbehälter (80) umfasst, der dazu ausgebildet ist, eine erste flüssige Lösung (M2) zu enthalten, umfassend die folgenden Schritte:
a1) Übermitteln eines Befehls zum Herstellen einer konzentrierten Mischung (M2) an das Befüllsystem (5),
a2) Beimengung einer vorbestimmten Menge des aktiven Stoffs (M1) in das Befüllsystem (5) dem ersten Vorratsbehälter vorgeschaltet (80) oder in den ersten Vorratsbehälter (80),
b) Verbinden des Befüllsystems (5) und des zu befüllenden Sprühbehälters (11) mittels der Verbindungsmittel (64, 94) zum Verbinden des Befüllsystems (5) mit dem Behälter (11),
c) Übermitteln eines Füllbefehls an eine Steuereinrichtung (51), mit der das Befüllsystem (5) versehen ist,
d) Betätigen der Pumpmittel (70), mit denen das Befüllsystem (5) versehen ist, die von der Steuereinrichtung (51) gesteuert werden und die dazu ausgebildet sind, den Behälter (11) wahlweise mit der oder den flüssigen Lösung(en) (E1, M2, M2', M3) zu befüllen, und
e) Lösen der Verbindungsmittel (64, 94) zwischen dem System (5) und dem Behälter (11), sobald der Behälter bis zu einer vorbestimmten Höhe befüllt ist,
wobei das Verfahren **dadurch gekennzeichnet ist,**
**dass** Schritt a) folgende Teilschritte umfasst:
a3) Transferieren eines vorbestimmten Volumens der zweiten flüssigen Lösung (E1), die vorzugsweise reines Wasser ist, zu dem ersten Vorratsbehälter (80), und
a4) Herstellen der konzentrierten Mischung (M2) in dem ersten Vorratsbehälter (80) durch Mischen des aktiven Stoffs (M1) und der zweiten flüssigen Lösung (E1) in vorbestimmten Proportionen (M1/E1).

13. Verfahren nach Anspruch 12,
**dadurch gekennzeichnet,**
**dass** Schritt d) mindestens einen Teilschritt d1) umfasst, bestehend im Auswählen der flüssigen Lösung (E1; M2; M2'; M3), die zu dem Behälter (11) geschickt wird, aus zumindest der ersten flüssigen Lösung (M2), der zweiten flüssigen Lösung (E1) und einer dritten flüssigen Lösung (M3), die eine Mischung aus der ersten und zweiten flüssigen Lösung (M2, E1) in vorbestimmten Proportionen (M2/E1) ist.

14. Verfahren nach Anspruch 13,
**dadurch gekennzeichnet,**
**dass**, wenn es sich bei der ausgewählten flüssigen Lösung (E1; M2; M2'; M3) um die dritte flüssige Lösung (M3) handelt, Schritt d) außerdem die folgenden, Schritt d1) nachfolgenden Teilschritte umfasst:
d2) Betätigen der Pumpmittel (70) mittels der Steuereinrichtung (51) zum gleichzeitigen Befüllen des Behälters (11) mit einer Mischung (M2') aus der ersten flüssigen Lösung (M2) und der zweiten flüssigen Lösung (E1),
d3) Erkennen, wenn der die erste flüssige Lösung (M2) enthaltende erste Vorratsbehälter (80) leer ist oder einen vorbestimmten Pegel der Flüssigkeit (M2) enthält, und Übermitteln dieser Information an die Steuereinrichtung (51),
d4) Betätigen der Pumpmittel (70) mittels der Steuereinrichtung (51) zum Ergänzen der Befüllung des Behälters (11) mit der zweiten flüssigen Lösung (E1), derart, dass der volle Behälter (11) eine dritte flüssige Lösung (M3) umfasst, die eine Mischung aus der ersten und zweiten flüssigen Lösung (M2, E1) in vorbestimmten Proportionen (M2/E1) ist.

15. Verfahren nach Anspruch 12,
**dadurch gekennzeichnet,**
**dass** Schritt a) nach den Schritten b), c) und d) stattfindet und dass der Schritt a) in der Beimengung des aktiven Stoffs (M1) zwischen dem ersten Vorratsbehälter und den Verbindungsmitteln (64, 94) besteht.

## Claims

1. System (5) for filling a sprayer cistern (11) with at least one liquid solution (E1, M2, M2', M3), comprising:
- at least one first tank (80) configured to contain a first liquid solution (M2),
- means (64, 94) for temporarily connecting the system (5) to the cistern (11),
- means (75) for incorporating an active material (M1) into the first tank (80) or between the first tank and the means for connecting (64, 94), and
- pumping means (70) controlled by a control device (51) and configured to selectively fill the cistern (11) with the liquid solution or solutions (E1, M2, M2', M3),
**characterised in that** the system (5) comprises a second tank (40) configured to contain a second liquid solution (E1) and further comprises means (40, 50, 51, 70, 75, 80, 92) for preparing the first liquid solution (M2) which are controlled by the control device (51) and which are configured to prepare this first liquid solution (M2) in the first tank (80) by mixing the second liquid solution (E1) and the active material (M1) in predetermined proportions (M1/E1), and **in that** the means (40, 50, 51, 70, 75, 80, 92) for preparing the first liquid solution (M2) comprise at least, on the one hand, the means (75) for incorporating an active material (M1) which are positioned between the first tank (80) and the second tank (40) and, on the other hand, agitation means (82) configured to maintain the first liquid solution (M2) in suspension in the first tank (80).

2. System (5) according to claim 1, **characterised in that** it comprises a unit (50) for preparing and for filling, adapted to incorporate the active material (M1) into the system (5), this unit (50) comprising:
- the control device (51),
- the first tank (80),
- the means (75) for incorporating, and
- the pumping means (70) configured to selectively fill the cistern (11) with the liquid solution or solutions (E1, M2, M2', M3), in a single process without intermediate manipulations.

3. System (5) according to claim 2, **characterised in that** the second tank (40) and the unit (50) for preparing and for filling are mounted on the same trailer (22).

4. System (5) according to claim 2, **characterised in that** the second tank (40) and the unit (50) for preparing and for filling are mounted on separate trailers (22).

5. System (5) according to one of the preceding claims, **characterised in that** the means (40, 50, 51, 70, 75, 80, 92) for preparing the first liquid solution (M2) operate while the system (5) is not connected to the cistern (11) by the means (64, 94) for temporarily connecting.

6. System (5) according to one of the preceding claims, **characterised in that** the system (5) comprises a device for automatically transferring, with a controlling dosing, the active material (M1) to the means for incorporating (75) positioned between the first tank (80) and the second tank (40).

7. System (5) according to one of the preceding claims, **characterised in that** the system (5) further comprises means (50, 51, 70, 91, 93, 94, 95, 96, 97) for selecting the liquid solution (E1; M2; M2'; M3) which is sent to the cistern (11) from among at least: the first liquid solution (M2), a second liquid solution (E1) and a third liquid solution (M3) which is a mixture of the first and second liquid solutions (M2; E1) in predetermined proportions (M2/E1).

8. System (5) according to one of the preceding claims, **characterised in that** the system (5) further comprises means (50, 51, 70, 91, 93, 94, 95) for selecting the liquid solution (E1; M2; M2'; M3) which is sent to the cistern (11), with these means (50, 51, 70, 91, 93, 94, 95, 96, 97) for selecting comprising at least:
- means (95) for confluing positioned upstream of the means (64, 94) for temporarily connecting the system (5) to the cistern (11),
- a first valve device (92) positioned between the first tank (80) containing the first solution (M2) and the means (95) for confluing, and
- a second valve device (91) positioned between the second tank (40) containing the second solution (E1) and the means (95) for confluing,
and **in that** the control device (51) is configured, on the one hand, to selectively open or close each valve device (91, 92) and, on the other hand, to open or cut off the circulation of a flow (F5) of filling in the means (64, 94) for connecting.

9. System (5) according to claim 7, **characterised in that** the means (95) for confluing are formed by a Venturi air aspirator.

10. System (5) according to one of the preceding claims, **characterised in that** the first tank (80) comprises a device (84) for detecting the level of the first liquid solution (M2) in suspension in the first tank (80)

11. System (5) according to one of the preceding claims, **characterised in that** the control device (51) is provided with communications means (52) which are configured to receive information coming from the cistern (11), with this information chosen from among the following: the relative position between the system (5) and the cistern (11), the free volume of the cistern (11) that has to be filled, the liquid solution or solutions (E1; M2; M2'; M3) selected for the filling of the cistern (11), the desired concentration in active material (M1) in each solution (M2; M2'; M3), or a combination of certain of these.

12. Method for filling a sprayer cistern (11), comprising at least the following steps:
a) incorporating an active material (M1) into a system for filling (5) comprising at least a first tank (80) configured to contain a first liquid solution (M2), comprising the steps
a1) transmitting an order to prepare concentrated mixture (M2) to the system for filling (5),
a2) incorporating a predetermined quantity of active material (M1) into the system for filling (5), upstream of the first tank (80) or into the first tank (80),
b) connecting the system for filling (5) and the sprayer cistern (11) to be filled using the means (64, 94) for connecting the system for filling (5) to the cistern (11),
c) transmitting a filling order to a control device (51) provided on the system for filling (5),
d) actuating pumping means (70) that are provided on the system for filling (5), which are controlled by the control device (51) and which are configured to selectively fill the cistern (11) with the liquid solution or solutions (E1, M2, M2', M3), and
e) disconnecting the means (64, 94) for connecting between the system (5) and the cistern (11) when the cistern is filled to a predetermined level,
with the method being **characterised in that** the step a) comprises the following sub-steps:
a3) transferring a predetermined volume of the second liquid solution (E1), which is more preferably pure water, to the first tank (80), and
a4) preparing the concentrated mixture (M2) in the first tank (80) by mixing the active material (M1) and the second liquid solution (E1) in predetermined proportions (M1/E1).

13. Method according to claim 12, **characterised in that** the step d) comprises at least one sub-step d1) consisting in selecting the liquid solution (E1; M2; M2'; M3) which is sent to the cistern (11) from among at least: the first liquid solution (M2), the second liquid solution (E1), and a third liquid solution (M3) which is a mixture of the first and second liquid solutions (M2, E1) in predetermined proportions (M2/E1).

14. Method according to claim 13, **characterised in that** when the liquid solution (E1; M2; M2'; M3) selected is the third liquid solution (M3), the step d) further comprises the following sub-steps following the step d1):
d2) actuating the pumping means (70) using the control device (51) in order to fill the cistern (11) simultaneously with a mixture (M2') of the first liquid solution (M2) and the second liquid solution (E1),
d3) detecting when the first tank (80) containing the first liquid solution (M2) is empty or contains a predetermined level of liquid (M2), and transmitting this information to the control device (51),
d4) actuating the pumping means (70) using the control device (51) in order to complement the filling of the cistern (11) with the second liquid solution (E1), in such a way that the full cistern (11) contains a third liquid solution (M3) which is a mixture of the first and second liquid solutions (M2, E1) in predetermined proportions (M2/E1).

15. Method according to claim 12, **characterised in that** the step a) is differed after the steps b), c) and d), and **in that** this step a) consists in incorporating the active material (M1) between the first tank and the means for connecting (64, 94).
